# EUROPÄISCHE PATENTSCHRIFT

(11) **EP 2 237 521 B1**
(45) Veröffentlichungstag und Bekanntmachung des Hinweises auf die Patenterteilung: **09.11.2011**
(21) Anmeldenummer: 10002597.2
(22) Anmeldetag: 12.03.2010
(51) Int. Cl.: H04L 29/06, H04L 12/56

(54) **Verfahren und Vorrichtung zur Anbindung externer Applikationsfunktionen an eine Ressourcensteuerung eines Zielnetzwerkes**
Method and device for connecting external application functions to a resource control centre of a target network
Procédé et dispositif d'intégration de fonctions d'application externes sur une commande de ressource d'un réseau cible

(30) Priorität: 03.04.2009 DE 102009016062
(43) Veröffentlichungstag der Anmeldung: 06.10.2010
(73) Patentinhaber: Deutsche Telekom AG, 53113 Bonn (DE)
(72) Erfinder: Krack-Haller, Helmut, 53125 Bonn (DE)

(56) Entgegenhaltungen:
- EP-A1- 1 959 620
- WO-A2-03/042856
- US-A1- 2007 002 897

## Beschreibung

Die Erfindung betrifft ein verfahren und eine Vorrichtung zur Anbindung von externen Applikationsfunktionen an eine Ressourcensteuerung eines Zielnetzwerkes. Insbesondere sollen externe Content (Inhalts)-Anbieter aus fremden Netzen in der Lage sein, die Ressourcensteuerung eines Zielnetzwerkes abzufragen.

### Gebiet der Erfindung:

Im heutigen Netz, wie es das Internet zur Verfügung stellt, ist es oftmals nicht möglich festzustellen, ob ein InhalteAnbieter einem anfragenden Kunden Daten mit einer garantierten Qualität zur Verfügung stellen kann, da er nicht weiß, wie die Netzwerkkapazitäten mit dezidierter Netzwerkqualität verteilt sind. Betrachtet man das Beispiel eines DSL Anschlusses, mit einem oder mehreren Kunden/Nutzergeräten, von denen mindestens ein Nutzergerät durch einen FTP-Download ein große Bandbreite in Anspruch nimmt, so weiß der Content-Anbieter/Inhalteanbieter in der Regel nicht, ob zum Zeitpunkt des genannten FTP Downloads genügend Qualitätsbandbreite im Netzwerk selber oder beim DSL Anschluss gegeben ist, um zum Beispiel einen Film an ein zweites Nutzergerät, das an diesem DSL-Anschluss angeschlossen ist, in der gewünschten Qualität zu übertragen. Sollte zum Beispiel ein DSL Anschluss mit 6 MBit/s Bandbreite gegeben sein, so kann z.B. durch das FTP-Nutzergerät bereits 4 MBit/s aufgrund eines Datei-Downloads in Beschlag genommen sein, so dass das zusätzliche Herunterladen eines Filmes beziehungsweise das Live-Streamen eines Filmes mit den verbleibenden 2 Mbit nicht möglich ist, da zumindest 5 Mbit gegeben sein müssen. Folglich müsste der Anbieter des Filmes (Content Anbieter) dem Benutzer des Nutzergerätes (anfragenden Kunden) mitteilen, dass nicht ausreichend Qualitätsbandbreite zur Verfügung steht, um den Film in einer ausreichenden Qualität bereitzustellen.

Um diese Informationen jedoch zu erlangen, müsste der Content Anbieter Zugriff auf die Ressourcensteuerung des Zielnetzwerkes haben, an die der anfragende Kunde angeschlossen ist. Die Ressourcensteuerung, wie sie im heutigen Netzwerk vorhanden ist, erlaubt jedoch nicht, dass Contentanbieter aus anderen Netzen, die nicht durch die Ressourcensteuerung gesteuert werden, auf die Ressourcensteuerung direkt, d.h. über die IP Transportfunktionen, ohne für die Signalisierung zusätzlich z.B. eine IMS Architektur im Netzwerk benutzen zu müssen, zugreifen können. Auch gibt es keinerlei Sicherheitsfunktionen für einen möglichen direkten Zugriff.

Gemäß den Vorgaben von nationalen/internationalen Normungs-und Standardisierungsgremien ist es heute nur möglich, den notwendigen Austausch von Signalisierungsnachrichten zur Netzressourcensteuerung zwischen den nicht im Zielnetzwerk integrierten und damit externen Applikationsfunktionen der Contentanbieter und dem Zielnetzwerk des Empfängers /Nutzers auf IMS (IP Multimedia Subsystem) basierende Verfahren durchzuführen.

Das IP Multimedia Subsystem (IMS) ist eine Sammlung von Spezifikationen des 3rd Generation Partnership Project (3GPP). Ziel von IMS ist ein standardisierter Zugriff auf Dienste aus unterschiedlichen Netzwerken. IMS verwendet ein All-IP-Netzwerk, dies bedeutet, dass sämtliche Kommunikation IP-basiert erfolgt. IMS unterstützt aber auch bestehende Netze wie GSM oder das herkömmliche analoge und das digitale (ISDN-)Telefonnetz. Typische Dienste sind VoIP-Telefonie oder Präsenzinformationen. Das Basisprotokoll von IMS ist das SIP, welches über ein dediziertes IP-Netz Verbindungen zwischen den Teilnehmern aufbaut.

Daher ergibt sich, dass eine Netzressourcen- & Zulassungssteuerung über IMS auf SIP (Session Initiation Protocol) basiert, das in erster Linie für Sprachdienste entwickelt wurde und für reine IP basierende Dienste zu aufwändig zu realisieren ist, da dieses auf den Layern 5-7 arbeitet.

Über die Netzressourcensteuerung werden zwecks Anfrage Freigabe bzw. Zusicherung / Ablehnung freier Netzkapazitäten zur Übertragung von Inhalten zwischen der Applikationsfunktion und dem Empfänger im Zielnetzwerk Daten ausgetauscht. Hierdurch ist es z.B. möglich, dass der Inhalteanbieter erfahren kann, ob dem anfragenden Kunden ausreichend Netzkapazität in einer gewünschten Qualität bereitgestellt werden kann, um die gewünschten Daten z.B. in einer ausreichenden Qualitätsbandbreite zu laden.

Diese Anfragemöglichkeit gibt es jedoch nur in lokalen Netzwerken. D.h. Anbieter im Telekom-Netzwerk können diese Informationen abfragen, ist jedoch ein Anbieter wie z.B. Time-Warner im Verizon-Netzwerk, so kann das System von Time-Warner nur über eine komplexe Steuerung auf die Ressourcen Steuerung zugreifen. Für externe Inhalteanbieter ist eine Anbindung beispielsweise über eine IMS Plattform zur Klärung freiverfügbarer Netzressourcen im Zielnetzwerk eines Empfängers zu komplex und aufwändig und daher wenig realistisch.

Die US 2007/0002897A1 offenbart ein Netzwerkmanagement-System, das eine Bandbreitensteuerung vornimmt.

Es gibt gemäß den Vorgaben von nationalen/internationalen Normungs- und Standardisierungsgremien keine direkte Möglichkeit auf IP Ebene zu prüfen, ob die anfragende, externe Applikation z.B. aufgrund einer zuvor getroffenen kommerziellen Vereinbarung berechtigt ist, eine Ressourcenanfrage zum Download von Inhalten an einen Empfänger des Zielnetzwerkes zu stellen.

### Überblick über die Erfindung:

Aufgabe der Erfindung ist die Bereitstellung eines Systems, das in der Lage ist, einen einfachen Zugriff auf die Netzressourcensteuerung bereitzustellen.

Gelöst wird diese Aufgabe durch ein Verfahren und eine Vorrichtung mit den Merkmalen der unabhängigen Ansprüche.

Weitere Ausführungen sind in den abhüngigen Ansprüchen beschrieben.

So beschreibt die Erfindung einen Mediator bzw. ein Mediatorsystem, um externe Applikationen, die in separaten, IP basierenden Netzwerken beheimatet sind, mit einer Netzressourcensteuerung eines anderen / fremden IP basierten Zielnetzwerkes zu verbinden.^{:} In der Standardisierung sind als Applikationsfunktionen z.B. das Herunterladen von Videos, Video online, Applikationen von IPTV-, oder Musiktitelanbietern, sowie z.B. von Anbietern digitaler Bücher, etc. bekannt. Es handelt sich somit um Anwendungen, die von den Inhaltsanbietern/ Contentanbietern bereitgestellt werden.

Der Mediator kann eine Anfrage über frei verfügbare Netzressourcen hinsichtlich ihrer Berechtigung prüfen und bei positivem Prüfungsergebnis kann er die Übertragung bzw. Transformation von Signalisierungsnachrichten an ein Zielnetzwerk ermöglichen.

Dabei ist es unerheblich, ob die zielnetzexterne Applikationsfunktion direkt mit dem Zielnetzwerk verbunden ist oder über ein bzw. mehrere (Transit-) Netzwerke eines anderen Netzbetreibers angebunden wurde.

Des Weiteren beinhaltet die Erfindung die Beschreibung einer Schnittstelle des Mediators zur Zielnetz-externen Applikationsfunktion.

Erfindungsgemäß werden die Signalisierungsnachrichten, die zurück an die anfragende externe Applikationsfunktion gesandt werden sollen, auf dem Antwortpfad in das gewünschte frotokollformat umgeformt.

Das Zielnetz kann so zeitnah die Ressourcenanfrage beantworten und entsprechend quittieren.

Folgende Vorteile für den Betreiber von Applikationsfunktionen und den Betreiber von IP basierenden Netzwerken ergeben sich aus der Erfindung:
■ Der Betreiber des Zielnetzwerkes erhält mit Hilfe des Mediators die Möglichkeit zu prüfen, ob die anfragende, externe Applikation berechtigt ist, eine Ressourcenanfrage zum Download von Inhalten an einen Empfänger des Zielnetzwerks zu stellen.
■ Für den Betreiber von Applikationsfunktionen erfolgt eine einfache, flexible und mit wenig Aufwand verbundene Anbindung an eine Ressourcensteuerung eines anderen / fremden IP basierenden Zielnetzwerkes. Nachträgliche Änderungen im Zielnetzwerk bleiben für die Betreiber Zielnetzwerke externer Applikationen transparent.
■ Sowohl für den Betreiber eines IP basierten Zielnetzwerkes als auch den Betreiber einer Applikationsfunktion ist es von Vorteil, dass für eine Anfrage über frei verfügbare Netzressourcen zwischen den Applikationsfunktionen und des Zielnetzwerks dieser Applikationen auf komplexe Anfragen - wie z.B. bei IMS (IP Multimedia Subsystem) basierende Verfahren - verzichten werden kann.

### Figuren Beschreibung:

Im Folgenden werden die einzelnen Figuren beschrieben, ohne dabei beschränkend zu sein,
Fig. 1: Alternative A über die Anbindung einer externen Applikation an ein Zielnetzwerk
Fig. 2: Alternative B über die Anbindung einer externen Applikation an ein Zielnetzwerk
Fig. 3: Alternative C über die Anbindung einer externen Applikation an ein Zielnetzwerk

### Detaillierte Beschreibung von Ausführungsbeispielen:

Das Kernelement der vorliegenden Erfindung bildet ein Mediator (System oder verfahren) welches beide Netzwerkwelten [Zielnetzwerk des Empfängers und Netzwerk des Inhalteanbieters (samt seiner Applikationsfunktion)] miteinander verbindet. Der Mediator kann technisch auch als Proxy und/oder Schnittstellenwandler mit Authentisierungsfunktionalität betrachtet werden.

Es ist dabei unerheblich, ob der Mediator im Zielnetzwerk des Empfängers integriert ist, oder bei einem dritten Netzbetreiber, der als Dienstleistung diese Mediatorfunktion zur Verfügung stellt und über (im folgenden Bild nicht dargestellte) Netzwerk Gateways mit der Netzressourcen- und Zulassungssteuerung im Zielnetzwerk und der Applikationsfunktion eines Inhalteanbieters verbunden ist.

Des Weiteren beinhaltet die Erfindung die Beschreibung einer Schnittstelle des Mediators zur netzexternen Applikationsfunktion (3rd Party API). Die zu übermittelnden Signalisierungsnachrichten werden in das erforderliche Zielformat transformiert, so dass diese Signalisierungsnachrichten im Zielnetz standardkonform weiterverarbeitet werden können.

Das Zielnetz kann so zeitnah die Ressourcenanfrage beantworten und entsprechend quittieren. Die zugehörigen Signalisierungsnachrichten können so wiederum von dem Mediator angepasst und zurück an die anfragende Applikationsfunktion übermittelt werden.

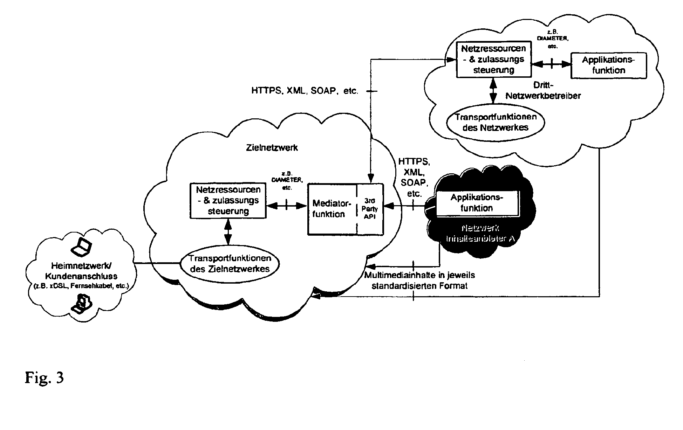

Die Mediatorfunktion (auch Mediator oder Mediatorsystem genannt) erfüllt folgende Aufgaben:
■ Bereitstellen einer Applikationsschnittstelle (3^{rd} Party API) gegenüber dem externen Netzwerk der anzubindenden Applikationsfunktion. Hierbei arbeitet das System vorzugsweise auf den Level 3-5 des OSI-Schichtenmodels für das IP-Netzwerk. Anfragen können als HTTPS, XML, SOAP gesendet werden. Es kann somit ein einfacheres Protokoll verwendet werden, als das SIP-orientierte. weiterhin kann eine Abstraktionsschicht eingeführt werden, die Funktionen oder ganze Funktionsabläufe kapselt. Dies ermöglicht, dass technisch betrachtet ein einfacherer Zugriff auf die Informationen der Netzressourcen & Zulassungssteuerung erfolgen kann.
■ Prüfen und ggf. Weiterleiten unter anderem folgender Informationen an eine Netzressourcen- und Zulassungssteuerung im Zielnetzwerk:
   - Datum sowie Start- und Stoppzeit einer genutzten, QoS basierenden Netzwerkbandbreite im Zielnetzwerk. Hierbei kann die Applikation z.B. anfragen, ob aktuell oder für einen bestimmten zukünftigen Zeitraum eine bestimmte Bandbreite vorhanden ist, die benötigt wird, um die gewünschten Informationen an das Heimnetzwerk bzw. den Kunden zu senden. Ferner kann ebenfalls Bandbreite gebucht werden für einen zukünftigen Zeitraum. Auch eine Abbestellung ist möglich. Um einen Missbrauch bei der Abbestellung zu vermeiden, wird kontinuierlich der tatsächliche Datenverkehr gemessen, um sicherzustellen, dass trotz Abbuchung nicht doch die Daten gesendet werden, was wiederum einen Einfluss auf das Billing hat (s.u.).
   - (ggf. zu transformierende) Signalisierungsnachrichten für eine Netzressourcen- und Zulassungssteuerung. Hierbei werden z.B. unterschiedliche Formate der Anfragen umgewandelt. Wenn diese z.B. im XML übermittelt wurden, so können die entsprechenden Tags umgewandelt werden.
   - Relevante Billinginformationen für die Abrechnung mit dem Inhalteanbieter. Wie oben bereits beschrieben, kann das Reservieren und das Abbestellen ebenfalls für eine Abrechnung verwendet werden, die der Netzwerkbelastung entspricht.
   - Quell- und Ziel IP Adressdaten inklusive logischer Netzwerkport (z.B. 443, etc.). Hierbei handelt es sich um die Zieladresse des Heimnetzwerks und der Quelladresse der Applikation bzw. des entsprechenden Servers.
   - Zu reservierende Netzbandbreite. Diese ist abhängig von der Art der Information, die vom Kundenanschluss bzw. Heimnetzwerk angefordert wurde.
   - Zu nutzende (QoS) Service Klasse und die zugehörigen qualitätsbestimmenden Parameter. Hierbei wird z.B.
      zwischen Sprachnachrichten, Konferenzschaltungen, die hohe QoS-Anforderungen aufweisen, und dem Herunterladen von Bildern oder ganzen Videofilmen, was im Hintergrund abläuft, unterschieden. Man könnte hier auf die bekannte Oos/ToS Layer 3 Priorisierung als Beispiel verweisen.
   - Medientyp des Inhalts (z.B. MPEG4; WAV; jpeg, etc.)
   - Anfragende Applikationsfunktionen einer QoS basierenden Netztwerkbandbreite. (=Inhalteanbieter oder Netzressourcen- und Zulassungssteuerung eines Drittnetzbetreibers); wie auch in Fig. 3 beschrieben. Hierbei wird der Typ der Applikationsfunktion mitgeteilt.
■ Autorisieren / ggf. Blocken von eingehenden Signalisierungsnachrichten gegenüber der Zielnetzwerk internen Netzressourcen - und Zulassungssteuerung, nach eingehender Prüfung von zum Beispiel eines zuvor vereinbarten bzw. erwartenden SSL-Zertifikates von der Applikationsfunktion / Netzressourcen - Zulassungssteuerung des Zielnetzwerk externen Inhalteanbieters. Durch die Autorisierung der Applikation kann ein unerlaubter Zugriff vermieden werden. Der Mediator stellt somit eine Art Firewall bzw. ein Schutzsystem für die Netzressourcensteuerung dar, so dass ein unmittelbarer Zugriff auf die Netzressourcen - Zulassungssteuerung vermieden wird.
■ Empfang und Verarbeitung von relevanten Protokollinformationen für eine Autorisierung der anfragenden Applikationsfunktion des Inhalteanbieters bzw. einer zielnetzexternen Netzressourcen- und Zulassungssteuerung eines Drittnetzbetreibers an den Mediator inklusive einer signalisierungsnachricht als Antwort an die Applikationsfunktion des Inhalteanbieters (Fig. 3). Neben der Schutzfunktion gibt es ferner eine Autorisierungsfunktion, die für den Inhalteanbieter relevant ist. Der Inhalteanbieter kontaktiert den Mediator, der eine Autorisierung durchführt. Hierdurch werden billing/abrechungsrelevante Informationen zugeordnet und es wird ein indirekter Zugriff auf das System erlaubt.
■ Anpassung (Transformation der transportierten Inhalte) von Signalisierungsnachrichten der zielnetzexternen Applikationsfunktion in das jeweils gültige Format am Ausgang zur (ggf. zielnetzinternen) Netzressourcen- und Zulassungssteuerung und vice versa. Hierbei werden z.B. unzulässige Inhalte abgefangen oder Anfragen von alten Versionen umgewandet.
■ Protokollanpassung der Proprietären Protokolle der Applikationsfunktion des Inhalteanbieters in Standardprotokolle, welche in Netzwerken verwendet werden. Hierbei wird im Gegensatz zu der Inhaltsanpassung in einer tieferen Ebene das Protokoll berücksichtigt. Dies kann z.B. durch Plugins erfolgen, die der Mediator verwendet, um eine möglichst große Breite an Protokollen zu unterstützen, die dann intern umgewandelt werden, um sie weiterzuleiten.

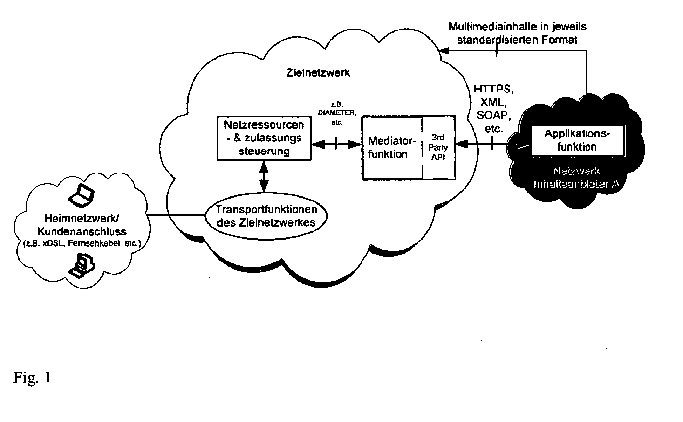

Grundlegende Prozessbeschreibung für Fig. 1 über eine Netzressourcenanfrage /-antwort im Gesamtkontext:
1. über eine bestehende Internetverbindung wird vom Inhaber eines Kundenanschlusses (Heimnetzwerk, Kundenanschluss xDSL) im Zielnetzwerk von der Applikationsfunktion eines Inhalteanbieters die Bereitstellung von multimedialen Inhalten (z.B. Herunterladen von Videofilmen, Musik-oder sonstiger Audiodateien, anderen Dokumenten, etc.) über eine eigens für diesen Zweck zu nutzende aber noch nicht konfigurierte Ende-zu-Ende QoS (Quality of Service) basierende Netzwerkverbindung gewünscht. Dies kann man sich in einfacher Form wie folgt vorstellen:
   Ein Benutzer nutzt die Homepage eines Dienstleisters/Contentanbieters/Inhalteanbieters, der Video-Filme bereitstellt und will diese Herunterladen (Kaufanfrage) . Der Inhalteanbieter nimmt über eine Applikationsfunktion mit dem Mediator-System Kontakt auf und fragt an, ob z.B. in den nächsten 2-3 Stunden genügend Bandbreite in bestimmter Qualität zur Verfügung gestellt werden kann, in denen der Film betrachtet wird. Wenn dies nicht möglich sein sollte, wird an den Benutzer eine entsprechende Meldung gesendet (Ablehnung der Kaufanfrage).
2. Anhand der beschriebenen Signalisierungsnachrichten, die über einen Mediator zwischen Netzressourcen- und Zulassungssteuerung des Zielnetzwerks und der Applikationsfunktion des zielnetzexternen Inhalteanbieters ausgetauscht werden, erfragt die Applikationsfunktion in Echtzeit die QoS basierenden Netzkapazitäten (Bandbreite) zum Empfänger im Zielnetzwerk.
3. Die Mediator prüft optional anhand geeigneter Verfahren (z.B. anhand zuvor vereinbarter SSL-Zertifikate mit dem externen Inhalteanbieter), ob die eingegangene Signalisierungsnachricht an eine zielnetzinterne Netzressourcen - und Zulassungssteuerung weitergeleitet werden soll. Im Negativfall sendet der Mediator eine Art "Besetztsignal" oder "negative Quittung" an die anfragende zielnetzexterne Applikationsfunktion zurück. Hierdurch wird sichergestellt, dass nur zugelassene Netzwerkanbieter einen Zugriff auf den Mediator und die nachgeschaltete Netzresourcen-Steuerung haben. Die Authentifizierung kann durch Zertifikate und/oder Passwörter und/oder IP-Adressen erfolgen.
4. Im Falle der Zulassung der Anfrage unter 3 sendet der Mediator die Anfragen ggfs konvertiert an die Netzressourcen- und Zulassungssteuerung des Zielnetzwerks. Diese prüft, ob die gewünschten QoS basierenden Net zwerkres sourcen zwischen dem Netzübergabepunkt zum Empfänger des Zielnetzwerks und der Zielnetzwerk externen Applikationsfunktion bereitgestellt werden können.
5. Die Applikationsfunktion erhält über den Mediator von der Netzressourcen- und Zulassungssteuerung des Zielnetzwerks entweder eine Art "Besetztsignal", da die verfügbare QoS Bandbreite zum Empfänger des Zielnetzwerkes nicht ausreicht, oder eine Art "Freigabesignal", auf dessen Basis die Applikationsfunktion die gewünschten Inhalte in garantierter Qualität dem Empfänger im Zielnetzwerk zusenden kann.
6. Im Falle einer negativen Antwort obliegt es der Applikationsfunktion, den Empfänger (Anforderer des Applikationsinhalte) entsprechend über die bestehende Internetverbindung (nicht über den Mediatorl) zu informieren (Ablehnung der Kaufanfrage).
7. Im Falle einer positiven Antwort sorgt die Netzressourcen- und Zulassungssteuerung des Zielnetzwerks über die relevanten Transportfunktionen des Zielnetzwerkes (Backbone-, Aggregation, - Zugangsnetzwerk) für eine entsprechende QoS basierende Netzwerkbandbreite zwischen der zielnetzexternen Applikationsfunktion und dem Netzübergabepunkt am Zielnetzwerk zum Empfänger. In einer alternativen Ausführungsform können die Anfrage für die Kapazität und die tatsächliche Reservierung noch aufgesplittet werden. So wird in einem ersten Schritt die Anfrage gesendet und in einem zweiten Schritt erfolgt erst die Reservierung. Durch die Reservierung kann z.B. ein Schlüssel generiert werden, der dann wieder für die Abbestellung genutzt werden kann.

Grundsätzlich obliegt es der Applikationsfunktion, den Empfänger (Anforderer des Applikationsinhaltes) entsprechend über die bestehende Internetverbindung (nicht über den Mediator) über das Ergebnis der QoS basierende Netzwerkressourcenanfrage zu informieren (z.B. Kaufbestätigung).

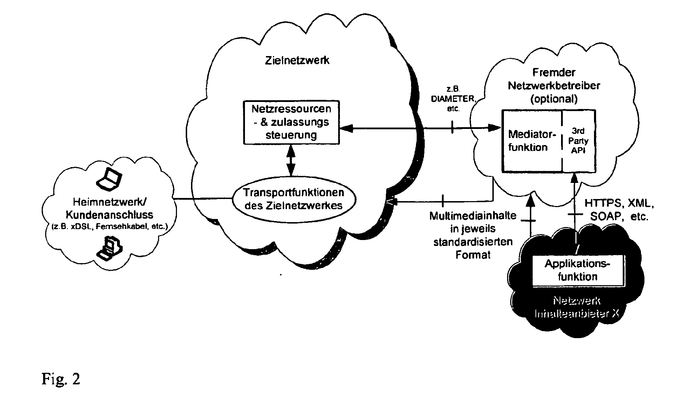

Die Fig. 2 zeigt eine Abwandlung der Fig. 1, bei der der Mediator auch in einem Frewdnetzwerk angeordnet sein kann. Dieser ist dann in der Lage, mit der Netzresourcen-Steuerung zu kommunizieren. Dies erfolgt in der Regel über SIP / DIAMETER. Der Mediator ist somit ein Protokoll-Umwandler mit Zusatzfunktionen.

In der Fig. 3 wird der Mediator nicht unmittelbar von der Applikationsfunktion angesprochen, sondern von der Netzressourcensteuerung eines Dritt-Netzwerkes. Die Netzressourcensteuerung des Dritt-Netzwerkes wird wiederum unmittelbar von einer Applikationsfunktion in diesem Netzwerk angesprochen. Somit fungiert die Netzressourcensteuerung des Dritt-Netzwerkes als Relay.

## Patentansprüche

1. Verfahren zur Steuerung des Zugriffs auf eine Netzressourcen- und Zulassungssteuerung innerhalb eines IP-basierten Netzwerkes durch eine Applikationsfunktion, wobei an das Netzwerk die Applikationsfunktionen unmittelbar oder mittelbar angebunden sind und ferner sind an das Netzwerk Heimnetzwerke über einen Kundenanschluss angeschlossen, mit einem Mediator, der die Schnittstelle zwischen der Netzressourcen- und Zulassungsteuerung und der Applikationsfunktion bereitstellt, umfassend die Schritte:
- IP-basiertes Abrufen von digitalen Inhalten von der Applikationsfunktion durch Systeme im Heimnetzwerk;
- IP-basiertes Kontaktieren und Anfragen des Mediators durch die Applikationsfunktion, wobei die Applikationsfunktion nicht das SIP-Protokoll verwendet, und wobei angefragt wird, ob dem Heimnetzwerk ausreichend Bandbreite in gewünschter Qualität zur Verfügung gestellt werden kann, zur Übertragung der digitalen Inhalte,
- Umwandeln der Anfrage durch den Mediator und Weiterleiten der Anfrage an die Netzressourcen- und Zulassungsteuerung;
- Falls die angefragte Bandbreite zur Verfügung steht, positives Antworten durch die Netzressourcen- und Zulassungsteuerung an den Mediator, Weiterleiten durch den Mediator an die Applikationsfunktion, und Übertragen der Informationen an das Heimnetzwerk; falls die angefragte Bandbreite nicht zur Verfügung steht, negatives Antworten durch die Netzressourcen-und Zulassungsteuerung an den Mediator, Weiterleiten der negativen Antwort durch den Mediator an die Applikationsfunktion, Mitteilen der Applikationsfunktion an das System im Heimnetzwerk; **dadurch gekennzeichnet, dass** der Mediator die folgenden Funktionen übernimmt:
- Autorisieren / ggf. Blocken von eingehenden Signalisierungsnachrichten gegenüber der Zielnetzwerk internen Netzressourcen und Zulassungssteuerung, nach eingehender Prüfung und
- Autorisierung der anfragenden Applikationsfunktion des Inhalteanbieters als Zielnetz externe Netzressourcen- und Zulassungssteuerung eines Drittnetzbetreibers an den Mediator

2. Das Verfahren nach dem vorhergehenden Anspruch, wobei der Mediator veränderbare Schnittstellen (API) der Applikationsfunktion bereitstellt.

3. Das Verfahren nach einem oder mehreren der vorhergehenden Ansprüche, wobei von der Applikationsfunktion das Datum, die Start-, Stoppzeit, die QoS und/oder die benötigte Netzwerkbandbreite im Zielnetzwerk mitgeteilt wird.

4. Das Verfahren nach dem vorhergehenden Anspruch, wobei neben der Anfrage auch eine Buchung der Bandbreite und eine Abbestellung der Bandbreite erfolgen kann.

5. Das Verfahren nach einem oder mehreren der vorhergehenden zwei Ansprüche, wobei eine Überprüfung hinsichtlich der tatsächlich genutzten Bandbreite erfolgt, um eine Falschbuchung zu erkennen.

6. Das Verfahren nach einem oder mehreren der vorhergehenden Ansprüche, wobei der Mediator eine oder mehrere der folgenden Funktionen übernimmt:
- Transformieren der Signalisierungsnachrichten von der Applikationsfunktion für eine Netzressourcen- und Zulassungssteuerung
- Verwalten und/oder Weiterleiten von relevanten Billinginformationen für die Abrechnung;
- Autorisieren / ggf. Blocken von eingehenden Signalisierungsnachrichten gegenüber der Zielnetzwerk internen Netzressourcen - und Zulassungssteuerung, nach eingehender Prüfung von zum Beispiel eines zuvor vereinbarten bzw. erwartenden SSL-Zertifikats von der Applikationsfunktion / Netzressourcen - Zulassungssteuerung des Zielnetzwerks externen Inhalteanbieters;
- Empfang und Verarbeitung von relevanten Protokollinformationen für eine Autorisierung der anfragenden Applikationsfunktion des Inhalteanbieters bzw. einer zielnetzexternen Netzressourcen- und Zulassungssteuerung eines Drittnetzbetreibers an den Mediator inklusive einer Signalisierungsnachricht als Antwort an die Applikationsfunktion des Inhalteanbieters
- Anpassung bzw. Transformation der transportierten Inhalte von Signalisierungsnachrichten der zielnetzexternen Applikationsfunktion in das jeweils gültige Format am Ausgang zur (ggf. zielnetzinternen) Netzressourcen- und Zulassungssteuerung und vice versa.
- Protokollanpassung der Proprietären Protokolle der Applikationsfunktion des Inhalteanbieters in Standardprotokolle, welche in Netzwerken verwendet werden.

7. Das Verfahren nach einem oder mehreren der vorhergehenden Ansprüche, wobei der Mediator von der Applikationsfunktion eine oder mehrere der folgenden Informationen erhält:
- Quell- und Ziel IP Adressdaten inklusive logischer Netzwerkport
- Zu reservierende Netzbandbreite
- Zu nutzende (QoS) Service Klasse
- Medientyp des Inhalts
- Anfragende Applikationsfunktionen einer QoS

8. Mediatorsystem zur Steuerung des Zugriffs auf eine Netzressourcen- und Zulassungssteuerung innerhalb eines IP-basierten Netzwerkes durch eine Applikationsfunktion, wobei an das Netzwerk die Applikationsfunktionen unmittelbar oder mittelbar angebunden sind und ferner sind an das Netzwerk Heimnetzwerke über einen Kundenanschluss angeschlossen, **gekennzeichnet durch**
- eine Schnittstelle zur der Netzressourcen- und Zulassungsteuerung
- eine weitere Schnittstelle zur Applikationsfunktion - - eine Bearbeitungseinheit, die IP-basiertes Anfragen von der Applikationsfunktion entgegennimmt, wobei die Applikationsfunktion nicht das SIP-Protokoll verwendet, und wobei angefragt wird, ob dem Heimnetzwerk ausreichend Bandbreite in gewünschter Qualität zur Verfügung gestellt werden kann zur Übertragung von digitalen Inhalten, wobei die Bearbeitungseinheit so ausgebildet und eingerichtet ist, dass ein Umwandeln der Anfrage durchgeführt wird, so dass ein Weiterleiten der Anfrage an die Netzressourcen- und Zulassungsteuerung ermöglicht wird;
wobei die Bearbeitungseinheit,
falls die angefragte Bandbreite zur Verfügung steht aufgrund von positiven Antworten **durch** die Netzressourcen- und Zulassungsteuerung diese an die Applikationsfunktion weitergibt, und
falls die angefragte Bandbreite nicht zur Verfügung steht, eine negative Antwort an die Applikationsfunktion erfolgt;
**dadurch gekennzeichnet, dass** die Bearbeitungseinheit so eingerichtet und ausgebildet ist folgende Aufgaben übernommen werden:
- Autorisieren / ggf. Blocken von eingehenden Signalisierungsnachrichten gegenüber der Zielnetzwerk internen Netzressourcen - und Zulassungssteuerung, nach eingehender Prüfung und
- Autorisierung der anfragenden Applikationsfunktion des Inhalteanbieters als zielnetzexterne Netzressourcen- und Zulassungssteuerung eines Drittnetzbetreibers an den Mediator

9. Mediatorsystem nach dem vorhergehenden Anspruch, wobei die Bearbeitungseinheit veränderbare Schnittstellen (API) der Applikationsfunktion bereitstellt.

10. Mediatorsystem nach einem oder mehreren der vorhergehenden System-Ansprüche, wobei das zweite Netzwerkinterface von der Applikationsfunktion das Datum, die Start-, Stoppzeit, die QoS und/oder die benötigte Netzwerkbandbreite im Zielnetzwerk empfängt.

11. Mediatorsystem nach dem vorhergehenden System-Anspruch, wobei die Bearbeitungseinheit neben der Anfrage auch eine Buchung der Bandbreite und eine Abbestellung der Bandbreite verwaltet.

12. Mediatorsystem nach einem oder mehreren der vorhergehenden zwei System-Ansprüche, wobei die Bearbeitungseinheit eine Überprüfung hinsichtlich der tatsächlich genutzten Bandbreite durchführt, um eine Falschbuchung zu erkennen.

13. Mediatorsystem nach einem oder mehreren der vorhergehenden System-Ansprüche, wobei die Bearbeitungseinheit so eingerichtet und ausgebildet ist, dass eine oder mehrere der folgenden Aufgaben übernommen werden:
- Transformieren der Signalisierungsnachrichten von der Applikationsfunktion für eine Netzressourcen- und Zulassungssteuerung
- Verwalten und/oder Weiterleiten von relevanten Billinginformationen für die Abrechnung;
- Autorisieren / ggf. Blocken von eingehenden Signalisierungsnachrichten gegenüber der Zielnetzwerk internen Netzressourcen - und Zulassungssteuerung, nach eingehender Prüfung von zum Beispiel eines zuvor vereinbarten bzw. erwartenden SSL-Zertifikats von der Applikationsiunktion / Netzressourcen - Zulassungssteuerung des Zielnetzwerk externen Inhalteanbieters;
- Empfang und Verarbeitung von relevanten Protokollinformationen für eine Autorisierung der anfragenden Applikationsfunktion des Inhalteanbieters bzw. einer zielnetzexternen Netzressourcen- und Zulassungssteuerung eines Drittnetzbetreibers an die Mediator inklusive einer Signalisierungsnachricht als Antwort an die Applikationsfunktion des Inhalteanbieters
- Anpassung bzw. Transformation der transportierten Inhalte von Signalisierungsnachrichten der zielnetzexternen Applikationsfunktion in das jeweils gültige Format am Ausgang zur (ggf. zielnetzinternen) Netzressourcen- und Zulassungssteuerung und vice versa.
- Protokollanpassung der proprietären Protokolle der Applikationsfunktion des Inhalteanbieters in Standardprotokolle, welche in Netzwerken verwendet werden.

14. Mediatorsystem nach einem oder mehreren der vorhergehenden System-Ansprüche, wobei die Bearbeitungseinheit von der Applikationsfunktion eine oder mehrere der folgenden Informationen erhält:
- Quell- und Ziel IP Adressdaten inklusive logischer Netzwerkport
- Zu reservierende Netzbandbreite
- Zu nutzende (QoS) Service Klasse und die zugehörigen Parameter
- Medientyp des Inhalts
- Anfragende Applikationsfunktionen einer QoS

## Claims

1. Method for controlling access by an application function to a network resource and authorization controller within an IP-based network, wherein the application functions are connected directly or indirectly to the network and in addition home networks are connected to the network through a customer connection, having a mediator that provides the interface between the network resource and authorization controller and the application function, comprising the steps:
- IP-based requesting of digital content by the application function through systems in the home network;
- IP-based contacting and querying of the mediator by the application function, wherein the application function does not use the SIP protocol, and wherein a query is made as to whether sufficient bandwidth with the desired quality can be made available to the home network for transmission of the digital content,
- conversion of the query by the mediator and relaying of the query to the network resource and authorization controller;
- in the event that the requested bandwidth is available, positive response by the network resource and authorization controller to the mediator, relaying by the mediator to the application function, and transmission of the information to the home network; in the event that the requested bandwidth is not available, negative response by the network resource and authorization controller to the mediator, relaying of the negative response by the mediator to the application function, reporting by the application function to the system in the home network; **characterized in that**
the mediator takes on the following functions:
- authorization / if applicable blocking of incoming signaling messages with regard to the network resource and authorization controller internal to the destination network after incoming checking and
- authorization to the mediator of the querying application function of the content provider as a network resource and authorization controller of a third-party network operator external to the destination network.

2. The method according to the preceding claim, wherein the mediator provides changeable interfaces (API) to the application function.

3. The method according to one or more of the preceding claims, wherein the date, the start time, the stop time, the QoS and/or the required network bandwidth in the destination network are communicated by the application function.

4. The method according to the preceding claim, wherein a reservation of the bandwidth and a cancellation of the bandwidth also can take place in addition to the query.

5. The method according to one or more of the preceding two claims, wherein a verification with regard to the bandwidth actually used takes place in order to detect an incorrect reservation.

6. The method according to one or more of the preceding claims, wherein the mediator takes on one or more of the following functions:
- transforming the signaling messages from the application function for a network resource and authorization controller
- managing and/or relaying relevant billing information for invoicing;
- authorization / if applicable blocking of incoming signaling messages with regard to the network resource and authorization controller internal to the destination network after incoming checking, for example of a previously agreed or expected SSL certificate from the application function / network resource and authorization controller of the content provider external to the destination network;
- receiving and processing relevant protocol information for an authorization to the mediator of the querying application function of the content provider or of a network resource and authorization controller of a third-party network operator external to the destination network including a signaling message as response to the application function of the content provider
- adaptation or transformation of the transported contents of signaling messages from the application function external to the destination network into the particular format valid at the output for the network resource and authorization controller (internal to the destination network, if applicable) and vice versa,
- protocol conversion from the proprietary protocols of the application function of the content provider into standard protocols that are used in networks.

7. The method according to one or more of the preceding claims, wherein the mediator obtains one or more of the following information items from the application function:
- source and destination IP address data, including logical network port
- network bandwidth to be reserved
- service class (QoS) to be used
- media type of the content
- querying application functions of a QoS.

8. Mediator system for controlling access by an application function to a network resource and authorization controller within an IP-based network, wherein the application functions are connected directly or indirectly to the network and in addition home networks are connected to the network through a customer connection, **characterized by**
- an interface to the network resource and authorization controller
- another interface to the application function
- a processing unit that receives IP-based queries from the application function, wherein the application function does not use the SIP protocol, and wherein a query is made as to whether sufficient bandwidth with the desired quality can be made available to the home network for transmission of digital content, wherein the processing unit is designed and configured such that a conversion of the query is performed so that relaying of the query to the network resource and authorization controller is made possible;
- wherein the processing unit, in the event that the requested bandwidth is available based on positive responses by the network resource and authorization controller, relays this to the application function, and in the event that the requested bandwidth is not available, a negative response is made to the application function;
**characterized in that** the processing unit is designed and configured such that the following tasks are taken on:
- authorization / if applicable blocking of incoming signaling messages with regard to the network resource and authorization controller internal to the destination network after incoming checking and
- authorization to the mediator of the querying application function of the content provider as a network resource and authorization controller of a third-party network operator external to the destination network.

9. Mediator system according to the preceding claim, wherein the processing unit provides changeable interfaces (API) to the application function.

10. Mediator system according to one or more of the preceding system claims,
wherein the second network interface receives, from the application function, the date, the start time, the stop time, the QoS and/or the required network bandwidth in the destination network.

11. Mediator system according to the preceding system claim, wherein the processing unit also manages a reservation of the bandwidth and a cancellation of the bandwidth in addition to the query.

12. Mediator system according to one or more of the preceding two system claims, wherein the processing unit performs a verification with regard to the bandwidth actually used in order to detect an incorrect reservation.

13. Mediator system according to one or more of the preceding system claims, wherein the processing unit is designed and configured such that one or more of the following tasks are taken on:
- transforming the signaling messages from the application function for a network resource and authorization controller
- managing and/or relaying relevant billing information for invoicing;
- authorization / if applicable blocking of incoming signaling messages with regard to the network resource and authorization controller internal to the destination network after incoming checking, for example of a previously agreed or expected SSL certificate from the application function / network resource and authorization controller of the content provider external to the destination network;
- receiving and processing relevant protocol information for an authorization to the mediator of the querying application function of the content provider or of a network resource and authorization controller of a third-party network operator external to the destination network, including a signaling message as response to the application function of the content provider
- adaptation or transformation of the transported contents of signaling messages from the application function external to the destination network into the particular format valid at the output for the network resource and authorization controller (internal to the destination network, if applicable) and vice versa,
- protocol conversion from the proprietary protocols of the application function of the content provider into standard protocols that are used in networks.

14. Mediator system according to one or more of the preceding system claims, wherein the processing unit obtains one or more of the following information items from the application function:
- source and destination IP address data, including logical network port
- network bandwidth to be reserved
- service class (QoS) to be used, and the associated parameters
- media type of the content
- querying application functions of a QoS.

## Revendications

1. Procédé de commande de l'accès à une gestion de ressources et d'admission réseau au sein d'un réseau sur base IP par une fonction d'application, les fonctions d'applications étant connectées au réseau de manière directe ou indirecte, et en outre des réseaux domestiques étant raccordés au réseau par l'intermédiaire d'un terminal d'abonné, moyennant un médiateur fournissant l'interface entre la gestion de ressources et d'admission réseau et la fonction d'application, comprenant les étapes :
- recherche sur base IP de contenus numériques de la fonction d'application par des systèmes intégrés au réseau domestique ;
- entrée en contact sur base IP avec le médiateur et requête posée à ce dernier par la fonction d'application, la fonction d'application n'utilisant pas le protocole SIP, afin de savoir s'il est possible de fournir suffisamment de largeur de bande dans la qualité souhaitée au réseau domestique pour la transmission des contenus numériques,
- transformation de la requête par le médiateur et acheminement de la requête à la gestion de ressources et d'admission réseau ;
- si la largeur de bande demandée est disponible, réponse positive de la gestion de ressources et d'admission réseau au médiateur, acheminement par le médiateur à la fonction d'application et transmission des informations au réseau domestique; si la largeur de bande demandée n'est pas disponible, réponse négative de la gestion de ressources et d'admission réseau au médiateur, acheminement de la réponse négative à la fonction d'application par le médiateur, transmission par la fonction d'application au système intégré au réseau domestique ;
**caractérisé en ce que** le mediateur effectue les fonctions suivantes :
- autorisation ou, le cas échéant, blocage de messages de signalisation entrants par rapport à la gestion de ressources et d'admission réseau interne au réseau destinataire, après vérification approfondie, et
- autorisation de la fonction d'application requérante du fournisseur de contenus en tant que gestion de ressources et d'admission réseau, externe au réseau destinataire, d'un opérateur de réseau tiers au médiateur.

2. Procédé selon la revendication précédente, dans lequel le médiateur fournit des interfaces variables (API) de la fonction d'application.

3. Procédé selon l'une ou plusieurs des revendications précédentes, dans lequel la fonction d'application fournit la date, l'heure de début et de fin, la QoS et/ou la largeur de bande réseau requise au sein du réseau destinataire.

4. Procédé selon la revendication précédente, dans lequel il est possible d'effectuer, outre la requête, également une réservation de la largeur de bande et une annulation de la largeur de bande.

5. Procédé selon l'une ou plusieurs des deux revendications précédentes, dans lequel une vérification portant sur la largeur de bande effectivement utilisée est effectuée afin de détecter une réservation erronée.

6. Le procédé selon l'une ou plusieurs des revendications précédentes, dans lequel le médiateur effectue l'une ou plusieurs des fonctions suivantes :
- transformation des messages de signalisation de la fonction d'application pour une gestion de ressources et d'admission réseau ;
- gestion et/ou acheminement d'informations de facturation pertinentes pour la facturation ;
- autorisation ou, le cas échéant, blocage de messages de signalisation entrants par rapport à la gestion de ressources et d'admission réseau interne au réseau destinataire, après vérification approfondie d'un certificat SSL, par exemple, de la fonction d'application / de la gestion de ressources et d'admission réseau, convenu au préalable ou attendu, du fournisseur de contenus externe au réseau destinataire ;
- réception et traitement d'informations de protocole pertinentes pour une autorisation .de la fonction d'application requérante du fournisseur de contenus ou d'une gestion de ressources et d'admission réseau externe au réseau destinataire d'un opérateur de réseau tiers au médiateur, y compris un message de signalisation comme réponse à la fonction d'application du fournisseur de contenus ;
- adaptation ou transformation des contenus transportés de messages de signalisation de la fonction d'application externe au réseau destinataire dans le format respectivement valide à la sortie vers la gestion de ressources et d'admission réseau (interne au réseau destinataire, le cas échéant) et vice versa ;
- adaptation des protocoles propriétaires de la fonction d'application du fournisseur de contenus en protocoles standard utilisés dans réseaux.

7. Le procédé selon l'une ou plusieurs des revendications précédentes, dans lequel le médiateur reçoit une ou plusieurs des informations suivantes de la fonction d'application :
- données d'adresses IP source et destination, y compris le port réseau logique
- largeur de bande réseau à réserver
- classe de qualité de service (QoS) à utiliser
- type de média du contenu
- fonctions d'application requérantes d'une QoS.

8. Système de médiateur pour la commande de l'accès à une gestion de ressources et d'admission réseau au sein d'un réseau sur base IP par une fonction d'application, les fonctions d'applications étant connectées au réseau de manière directe ou indirecte, et en outre des réseaux domestiques étant raccordés au réseau par l'intermédiaire d'un terminal d'abonné, **caractérisé par**
- une interface vers la gestion de ressources et d'admission réseau
- une autre interface vers la fonction d'application
- une unité de traitement réceptionnant une requête sur base IP de la fonction d'application, la fonction d'application n'utilisant pas le protocole SIP, afin de savoir s'il est possible de fournir suffisamment de largeur de bande dans la qualité souhaitée au réseau domestique pour la transmission des contenus numériques, l'unité de traitement étant conçue et agencée pour effectuer une transformation de la requête, de manière à permettre un acheminement de la requête à la gestion de ressources et d'admission réseau ; dans lequel,
si la largeur de bande demandée est disponible, l'unité de traitement transmet les réponses positives de la gestion de ressources et d'admission réseau à la fonction d'application, et si la largeur de bande demandée n'est pas disponible, une réponse négative est envoyée à la fonction d'application ;
**caractérisé en ce que** l'unité de traitement est agencée et conçue de manière qu'une ou plusieurs des tâches suivantes soient effectuées :
- autorisation ou, le cas échéant, blocage de messages de signalisation entrants par rapport à la gestion de ressources et d'admission réseau interne au réseau destinataire, après vérification approfondie, et
- autorisation de la fonction d'application requérante du fournisseur de contenus en tant que gestion de ressources et d'admission réseau, externe au réseau destinataire, d'un opérateur de réseau tiers au médiateur.

9. Système de médiateur selon la revendication précédente, dans lequel l'unité de traitement fournit des interfaces variables (API) de la fonction d'application.

10. Système de médiateur selon l'une ou plusieurs des revendications de système précédentes, dans lequel la deuxième interface réseau reçoit, de la fonction d'application, la date, l'heure de début et de fin, la QoS et/ou la largeur de bande réseau requise au sein du réseau destinataire.

11. Système de médiateur selon la revendication de système précédente, dans lequel l'unité de traitement gère, outre la requête, également une réservation de la largeur de bande ou une annulation de la largeur de bande.

12. Système de médiateur selon l'une ou plusieurs des deux revendications de système précédentes, dans lequel l'unité de traitement effectue une vérification portant sur la largeur de bande effectivement utilisée afin de détecter une réservation erronée.

13. Système de médiateur selon l'une ou plusieurs des revendications de système précédentes, dans lequel l'unité de traitement est agencée et conçue de manière qu'une ou plusieurs des tâches suivantes soient effectuées :
- transformation des messages de signalisation de la fonction d'application pour une gestion de ressources et d'admission réseau ;
- gestion et/ou acheminement d'informations de facturation pertinentes pour la facturation;
- autorisation ou, le cas échéant, blocage de messages de signalisation entrants par rapport à la gestion de ressources et d'admission réseau interne au réseau destinataire, après vérification approfondie d'un certificat SSL, par exemple, de la fonction d'application / de la gestion de ressources et d'admission réseau, convenu au préalable ou attendu, du fournisseur de contenus externe au réseau destinataire ;
- réception et traitement d'informations de protocole pertinentes pour une autorisation de la fonction d'application requérante du fournisseur de contenus ou d'une gestion de ressources et d'admission réseau externe au réseau destinataire d'un opérateur de réseau tiers au médiateur, y compris un message de signalisation comme réponse à la fonction d'application du fournisseur de contenus ;
- adaptation ou transformation des contenus transportés de messages de signalisation de la fonction d'application externe au réseau destinataire dans le format respectivement valide à la sortie vers la gestion de ressources et d'admission réseau (interne au réseau destinataire, le cas échéant) et vice versa ;
- adaptation des protocoles propriétaires de la fonction d'application du fournisseur de contenus en protocoles standard utilisés dans réseaux.

14. Système de médiateur selon l'une ou plusieurs des revendications de système précédentes, dans lequel l'unité de traitement reçoit une ou plusieurs des informations suivantes de la fonction d'application :
- données d'adresses IP source et destination, y compris le port réseau logique
- largeur de bande réseau à réserver
- classe de qualité service (QoS) à utiliser
- type de média du contenu
- fonctions d'application requérantes d'une QoS.
